Europäisches Patentamt

European Patent Office

Office européen des brevets

(19)

(11) Numéro de publication: **0 000 680**
**B1**

(12) **FASCICULE DE BREVET EUROPEEN**

(21) Numéro de dépôt: **78400061.4**

(22) Date de dépôt: **20.07.78**

(51) Int. Cl.³: **G 01 F 23/16, F 01 M 11/12**
// .H 01 H 37/00

(54) **Indicateur de niveau d'un liquide contenu dans un réservoir.**

(30) Priorité: **26.07.77 FR 7722955**

(43) Date de publication de la demande:
**07.02.79 Bulletin 79/03**

(45) Mention de la délivrance du brevet:
**09.01.80 Bulletin 80/01**

(84) Etats contractants désignés: **DE GB SE**

(56) Documents cités:
**DE – B – 1 249 550**
**FR – A – 2 230 980**
**FR – A – 2 338 483**

(73) Titulaire: **SOCIETE ANONYME D.B.A.,**
**98, boulevard Victor Hugo,**
**F–92115 Clichy (FR)**

(72) Inventeur: **Verne, Michel,**
**135, rue Daniel Casanova,**
**F–93300 Aubervilliers (FR)**

(74) Mandataire: **Brulle, Jean,**
**44, rue François 1er,**
**F–75008 Paris (FR)**

Indicateur de niveau d'un liquide contenu dans un réservoir

L'invention se rapporte à un indicateur de niveau d'un liquide contenu dans un réservoir, ce dernier étant constitué par exemple par le carter du moteur d'un véhicule automobile.

Il existe de nombreux types d'indicateurs de niveau, et l'on connaît notamment par le Brevet Allemand No. 1 249 550 un appareil pneumatique d'indication de niveau comprenant une source de pression gazeuse communiquant avec une sonde tubulaire plongée dans le liquide et avec un manomètre indicateur, cette source de pression gazeuse comportant un boîtier qui définit une chambre remplie de gaz et une résistance chauffante servant à accroître la pression qui y règne par échauffement des gaz, ainsi qu'un dispositif bistable à action brusque dont le fonctionnement est commandé par cette même résistance et a pour effet de couper et de rétablir cycliquement son circuit électrique d'alimentation. Ce dispositif bistable assure en outre la commande mécanique d'une soupape d'admission de gaz froids dans la chambre, cependant qu'un clapet d'échappement permet aux gaz chauds et surpressés de parvenir à la sonde et au manomètre indicateur. Ainsi conçu, un tel appareil fournit une indication semi-continue du niveau de liquide contenu dans le réservoir.

Partant de cet état de la technique, la présente invention se donne pour but de concevoir un indicateur de niveau propre à assurer la surveillance du niveau effectif de liquide contenu dans le réservoir par rapport à une valeur de niveau minimum admissible, et à actionner automatiquement un système avertisseur lorsque le niveau effectif s'abaisse en dessous de ce niveau minimum.

Conformément à l'invention, ce but est atteint au moyen d'un appareil comprenant une sonde tubulaire plongée dans le liquide et débouchant à une profondeur définissant le niveau minimum de liquide dans le réservoir, une source de pression gazeuse comportant un boîtier définissant une chambre remplie de gaz communiquant avec la sonde et une résistance chauffante incluse dans ladite chambre et destinée à accroître la pression qui y règne lors de la mise en œuvre de cette source de pression gazeuse, et un dispositif bistable à action brusque incluant un élément chauffant électrique alimenté par le même circuit que ladite résistance chauffante et conçu pour faire passer cycliquement ce dispositif d'une position de fermeture à une position d'ouverture du circuit commun d'alimentation, et réciproquement, à la suite de la mise en œuvre de la source de pression gazeuse, cet appareil étant caractérisé en ce que le dispositif bistable est en outre agencé de manière à actionner un organe d'avertissement lorsqu'il est en position de fermeture, et en ce qu'est par ailleurs prévu un dispositif de verrouillage qui répond aux variations de pression à l'intérieur de la chambre en passant d'une position de repos à une position de verrouillage lorsque cette pression vient à excéder une valeur prédéterminée indiquant ainsi que le niveau de liquide dans le réservoir est au dessus du minimum admissible, ledit dispositif de verrouillage coopérant avec ledit dispositif bistable pour l'empêcher alors de revenir à sa position de fermeture et empêcher ainsi son fonctionnement cyclique.

Dans une forme avantageuse de réalisation, le dispositif bistable comporte un contact mobile coopérant en position de fermeture avec un contact fixe de manière à fermer le circuit commun d'alimentation de ladite résistance chauffante et dudit élément chauffant, et ces contacts contrôlent alors simultanément le circuit d'actionnement de l'organe d'avertissement. En outre est prévu un moyen de butée mobile dont le déplacement, commandé par le dispositif de verrouillage lorsque celui-ci vient occuper sa position de verrouillage, a pour effet de s'opposer à l'engagement mutuel desdits contacts.

Dans l'application particulière au contrôle du niveau d'huile dans le carter du moteur d'un véhicule automobile, le circuit d'alimentation de la résistance chauffante et de l'élément chauffant et le circuit d'actionnement de l'organe d'avertissement sont des circuits parallèles qui sont tous deux contrôlés par l'interrupteur de clef de contact du véhicule, et l'organe d'avertissement est constitué par un voyant lumineux du tableau de bord qui est lui-même monté en série avec le mano-contact de pression d'huile. De la sorte, ce voyant, qui s'allume en continu dès l'établissement du contact d'allumage et s'éteint normalement une fois qu'est démarré le moteur, se rallume en clignotant au rythme du fonctionnement du dispositif bistable en cas d'insuffisance du niveau d'huile, indiquant ainsi clairement cette anomalie au conducteur, ceci sans nécessiter pour autant l'installation d'un moyen d'avertissement supplémentaire.

On décrira maintenant à titre d'exemple non limitatif un mode de réalisation particulier de l'invention en se référant aux dessins annexés dans lesquels:

– la figure 1 représente schématiquement un indicateur de niveau du liquide contenu dans le carter du moteur d'un véhicule automobile, dans le cas où ce niveau est légèrement inférieur au niveau minimum admissible; et

– la figure 2 représente l'indicateur de niveau de la figure 1 dans le cas où le liquide contenu dans le carter du moteur est à un niveau sensiblement supérieur au niveau minimum admissible.

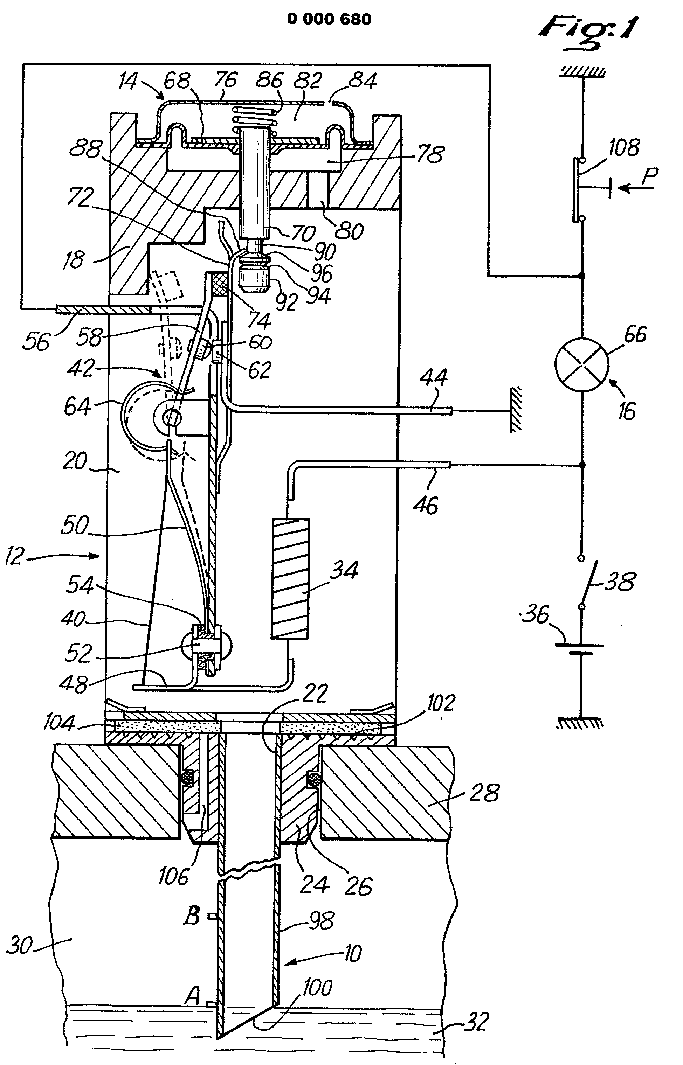

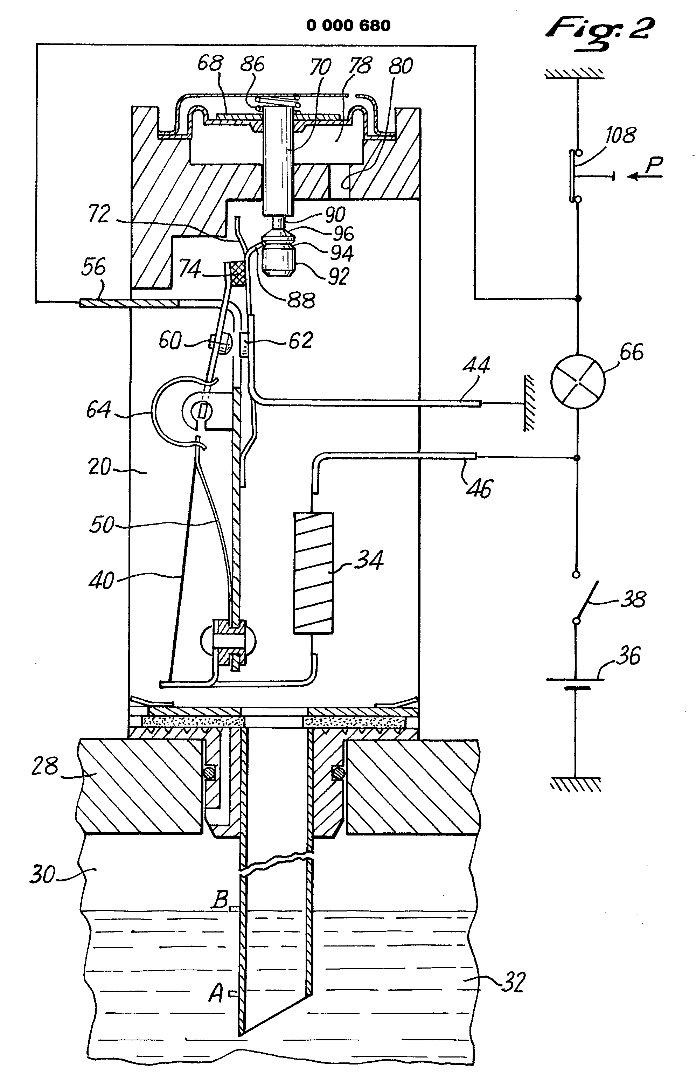

L'indicateur de niveau représenté sur les figures 1 et 2 comprend une sonde désignée par la référence générale 10, une source de pression gazeuse désignée par la référence générale 12, un dispositif de verrouillage désigné par la référence générale 14, et un système avertisseur désigné par la référence générale 16. La source de pression gazeuse 12 comporte un boîtier 18 dans lequel est définie une chambre remplie de gaz 20 qui communique avec la sonde 10 par un orifice de mesure 22 formé dans un embout tubulaire 24 reçu de façon étanche dans une ouverture 26, de section cylindrique, pratiquée dans la paroi supérieure 28 du réservoir 30, représenté seulement partiellement sur les figures. Le réservoir 30 est constitué dans le mode de réalisation représenté par le carter du moteur d'un véhicule automobile, le liquide dont le niveau est à surveiller étant le fluide de lubrification 32 contenu dans ce carter. La source de pression gazeuse 12 comprend en outre une résistance chauffante 34 disposée à l'intérieur de la chambre 20 et alimentée par un circuit électrique comprenant, entre autres, une source de tension continue 36 telle que, par exemple, la batterie d'accumulateur du véhicule, et un interrupteur 38 constitué de préférence par l'interrupteur de clé de contact du véhicule. Ce circuit électrique comprend de plus un fil chauffant 40 et un dispositif bistable 42 tous deux disposés à l'intérieur de la chambre 20 et servant à fermer le circuit comprenant la résistance chauffante 34 sur une borne de sortie 44 connectée à la masse du véhicule, la résistance chauffante 34 étant elle-même reliée à l'interrupteur 38 par une borne d'entrée 46.

L'une des extrémités du fil chauffant 40 est fixée à une borne 48 disposée à l'intérieur du boîtier 18 et par laquelle elle est reliée à la résistance chauffante 34, tandis que l'autre extrémité du fil 40 est sollicitée en tension par un ressort à lame 50 dont l'extrémité opposée est fixée au boîtier 18 par un revet 52 assurant également la fixation de la borne 48 qui se trouve isolée électriquement de la lame 50 par un élément isolant 54. Le rivet 52 assure également la fixation dans le boîtier 18 d'une seconde borne de sortie 56 sur laquelle est monté de façon pivotante un bras 58 portant un contact mobile 60 susceptible de venir engager un contact fixe 62 porté par la borne de sortie 44. Le pivotement du bras 58 est commandé par un ressort à lame 64 sensible au déplacement de l'extrémité libre du ressort à lame 50, ce dernier étant lui-même commandé par les changements de longueur du fil chauffant 40. Le dispositif bistable 42 est constitué essentiellement par le contact mobile 60 et par le contact fixe 62 et il est disposé dans sa totalité à l'intérieur de la chambre 20. On remarquera que le contact mobile 60 est relié électriquement en permanence à la borne de sortie 56. Le système avertisseur 16 est constitué essentiellement par un organe d'avertissement 66, par exemple par un voyant lumineux ou par tout autre dispositif analogue susceptible d'être monté sur le tableau de bord du véhicule. Cet organe d'avertissement 66 est monté entre les bornes d'entrée 46 et de sortie 56 de telle sorte qu'il est actionné lorsque le contact mobile 60 engage le contact fixe 62, l'interrupteur de clé de contact 38 étant fermé par ailleurs.

Le dispositif de verrouillage 14 comprend principalement des moyens formant piston constitués par une membrane 68 et un poussoir 70 qui commandent les déplacements d'une butée mobile 72 sur laquelle peut venir prendre appui un bloc de ferrite 74 disposé à l'extrémité du bras 58 portant le contact mobile 60 et dont le rôle apparaîtra dans la suite de la description. Les bords périphériques externes de la membrane 68 sont pincés entre un couvercle 76 et la paroi du boîtier 18 opposée à l'embout 24 de telle sorte que cette membrane 68 délimite avec le boîtier 18 et le couvercle 76 une chambre de travail 78 qui communique avec la chambre 20 par un passage 80 et une seconde chambre 82 qui communique avec l'atmosphère par une ouverture 84 et dans laquelle est disposé un ressort 86 sollicitant normalement la membrane 68 vers le bas en considérant les figures. Le poussoir 70 est solidaire de la membrane 68 et traverse la paroi du boîtier 18 pour coopérer avec une patte 88 formée sur l'extrémité libre d'une lame élastique qui constitue la butée mobile 72 et dont l'autre extrémité est fixée par tout moyen approprié, tel que, par exemple, par soudure, à la borne de sortie 56. L'extrémité du poussoir 70 disposée dans la chambre 20 pour coopérer avec la patte 88 comporte une section de petit diamètre 90 et se termine par une section de grand diamètre 92 dans laquelle est ménagée une gorge 94 disposée au voisinage de la section de petit diamètre 90, les parties de petit diamètre 90 et de grand diamètre 92 étant raccordées par une partie tronçônique 96 permettant à la patte 88 de passer de la partie de petit diamètre 90 à la partie de grand diamètre 92 lorsque le poussoir 70 est sollicité vers le haut en considérant les figures. Par contre, on remarquera que, lorsque l'extrémité de la patte 88 est engagée dans la gorge 94, l'élasticité de la lame élastique 72 empêche normalement son échappement de sorte que le poussoir 70 se trouve alors verrouillé dans sa position haute, telle que représentée sur la figure 2.

De préférence, un passage de fuite définissant une perte de charge contrôlée est également prévu pour mettre en communication de façon permanente la chambre 20 et l'atmosphère de façon à éviter que l'air enfermé dans la sonde 10, constituée de préférence par un tube 98 dont une extrémité biseautée 100 plonge dans le liquide 32, ne remonte sensiblement et de façon irréversible lorsque le moteur se refroidit, ce qui pourrait avoir pour conséquence de laisser croire lors de la mesure suivante à un niveau de liquide 32 à l'intérieur du carter moteur 30 sensiblement supérieur au niveau réel. Dans le mode de réalisation représenté, ce passage de fuite est constitué par un sillon en forme de spirale 102 formé sur l'embout 24 en regard d'une rondelle d'étanchéité 104 disposée entre ce dernier et le reste du boîtier 18. Le sillon 102 débouche de part et d'autre de la rondelle 104 et un passage 106 est également prévu dans l'embout 24 pour mettre en communication la chambre définie à l'intérieur du carter 30 au-dessus du liquide 32 avec le sillon 102 au voisinage de son extrémité débouchant dans l'orifice d'alimentation 22.

On remarquera en dernier lieu que le mano-contact de pression d'huile 108 du véhicule est également monté en série avec l'organe d'avertissement 66 et l'interrupteur de clé de contact 38 pour définir un troisième circuit électrique, connu en soi, permettant à l'organe d'avertissement 66 d'indiquer si la pression d'huile à l'intérieur du carter du moteur du véhicule est correcte avant la mise en œuvre de ce dernier et après la fermeture de l'interrupteur de clé de contact.

L'indicateur de niveau qui vient d'être décrit en se référant aux figures 1 et 2 fonctionne de la façon suivante:

Lorsque le véhicule est au repos et lorsque le contact est coupé, les différents éléments constituant l'indicateur de niveau occupent les positions représentées sur la figure 1. On a représenté en outre sur cette figure le cas où le niveau du liquide 32 contenu dans le réservoir 30 est légèrement inférieur au niveau minimum A admissible, le niveau maximum B étant également indiqué à titre d'information. Lorsque le conducteur du véhicule met le contact, l'interrupteur de clé de contact 38 se ferme et le mano-contact de pression d'huile 108 est normalement en position fermée de telle sorte que l'organe d'avertissement 66 est mis en oeuvre en continu. Simultanément, le circuit électrique comprenant la résistance 34 et le fil chauffant 40 se ferme de telle sorte que le gaz contenu dans la chambre 20, constitué par de l'air atmosphérique dans le mode de réalisation décrit, s'échauffe et que sa pression tend à augmenter. Parallèlement, le fil chauffant 40 se dilate de telle sorte que les lames de ressort 50 et 64 ainsi que le bras 58 prennent les positions représentées en traits interrompus sur la figure 1.

Etant donné que le niveau du liquide 32 à l'intérieur du réservoir 30 est inférieur au niveau minimum A, la chambre 20 communique directement par l'intermédiaire du tube 98 avec la chambre définie au-dessus du liquide 32 à l'intérieur du réservoir 30. Il en résulte que l'échauffement de l'air à l'intérieur de la chambre 20 par la résistance 34, qui devrait avoir normalement pour conséquence d'augmenter la pression à l'intérieur de la chambre 20, est compensé par l'échappement de l'air contenu dans cette dernière par l'extrémité du tube 98. La pression régnant à l'intérieur de la chambre 20 reste donc sensiblement constante et n'augmente en tous cas pas suffisamment pour relever le poussoir 70 par l'intermédiaire de la membrane 68. La patte 88 de la lame élastique 72 reste donc en appui contre la section de petit diamètre 90 du poussoir 70.

Lorsque l'allongement du fil chauffant 40 a provoqué le déplacement du dispositif bistable 42 jusqu'à la position représentée en traits interrompus sur la figure 1, le contact mobile 60 est séparé du contact fixe 62. Cependant, le circuit comprenant la résistance chauffante 34 et le fil chauffant 40 reste fermé sur la borne 56 de telle sorte que la résistance chauffante 34 et le fil chauffant 40 restent sous tension jusqu'à la mise en route du moteur du véhicule. Le fil chauffant 40 garde donc sa position allongée qui permet de maintenir le contact mobile 60 en position d'attente.

Lorsque le moteur du véhicule est mis en route, il en résulte l'ouverture du mano-contact de pression d'huile 108. Une première conséquence en est la mise hors circuit de l'organe d'avertissement 66. Cependant, il en résulte également la mise hors circuit du fil chauffant 40 et de la résistance chauffante 34, qui a pour principale conséquence la diminution de longueur du fil 40. Celle-ci entraîne rapidement la venue en engagement du contact mobile 60 avec le contact fixe 62, laquelle n'est pas empêchée par la lame élastique 72 puisque le dispositif de verrouillage 14 occupe toujours sa position de repos. Il en résulte un actionnement de l'organe d'avertissement 66, ainsi qu'une nouvelle fermeture du circuit comprenant la résistance chauffante 34 et le fil chauffant 40. La fermeture de ce dernier circuit entraînant un nouvel allongement du fil chauffant 40, le contact mobile 60 est à nouveau séparé du contact fixe 62 sous l'action des lames élastiques 50 et 64. L'organe d'avertissement 66 est donc à nouveau hors circuit et le fil chauffant 40 se rétracte une nouvelle fois jusqu'à ce que le contact mobile 60 réengage le contact fixe 62 pour provoquer un nouvel actionnement de l'organe d'avertissement 66 et un nouvel allongement du fil chauffant 40. L'organe d'avertissement 66 est ainsi actionné de façon cyclique jusqu'à l'ouverture de l'interrupteur du véhicule, c'est-à-dire en fait jusqu'à l'arrêt de ce dernier. L'information ainsi obtenue sur le tableau de bord du véhicule concernant l'insuffisance de niveau de liquide à l'intérieur du carter du moteur et apparaissant après la mise en route du moteur peut être aisément distinguée de l'information concernant l'existence d'une pression d'huile insuffisante lors de la mise en route du moteur. Ces deux informations sont communiquées au conducteur du véhicule par le même organe d'avertissement 66 et sont clairement différenciées l'une de l'autre par le caractère continu de l'actionnement de cet organe lorsque l'information porte sur la pression d'huile et par le caractère cyclique de cet actionnement lorsque l'information porte sur le niveau d'huile.

On décrira maintenant, en se référant à la figure 2, le processus de fonctionnement de l'indicateur de niveau lorsque le niveau du liquide 32 contenu dans le réservoir 30 est sensiblement supérieur au niveau minimum admissible A et par exemple égal au niveau maximum B. Lors de la fermeture de l'interrupteur de clé de contact 38, l'allongement du fil 40 ayant pour conséquence le déplacement des lames élastiques 50 et 64 et du bras 58 dans les positions représentées en traits interrompus sur la figure 1 se produisent de la même façon que dans le cas précédent. Cependant, l'échauffement de l'air à l'intérieur de la chambre 20 dû à la mise sous tension de la résistance 34 a pour conséquence une augmentation de la pression régnant à l'intérieur de cette chambre, étant donné que l'air ne s'échappe pas immédiatement par l'extrémité du tube 98 comme dans le cas précédent, mais doit refouler le liquide contenu dans celui-ci, ce qui conduit à une augmentation de pression à l'intérieur de la chambre 20 dont la valeur est fonction de la profondeur du tube 98 qui est immergée dans le liquide 32. Il en résulte que la pression régnant à l'intérieur de la chambre 20 et communiquée par l'orifice 80 à l'intérieur de la chambre de commande 78 devient suffisante pour soulever la membrane 68 à l'encontre du ressort 86, de telle sorte que la patte 88 de la lame élastique 72 vient s'engager dans la gorge 94 formée dans la partie de grand diamètre 92 du poussoir 70. La force exercée par la lame élastique 72 est alors suffisante pour maintenir le poussoir 70 dans la position représentée sur la figure 2, à l'encontre du ressort 86, quelle que soit la pression régnant ensuite dans la chambre 78. Lors de l'ouverture du mano-contact de pression d'huile 108 provoquée par la mise en route du moteur du véhicule, le circuit électrique comprenant la résistance chauffante 34 et le fil chauffant 40 n'est plus alimenté, ce qui entraîne le raccourcissement du fil chauffant 40 tendant à ramener le bras 58 dans la position qu'il occupe en traits pleins sur la figure 1. Cependant, par suite de l'engagement de la patte 88 dans la gorge 94, la lame élastique 72 constitue alors une butée contre laquelle vient prendre appui l'extrémité du bras 58 par l'intermédiaire du bloc de ferrite 74. Le contact mobile 60 ne peut donc venir en engagement avec le contact fixe 62, de telle sorte que le cycle de va et vient du bras 58 décrit en se référant à la figure 1 ne peut se produire et que la mise hors circuit de l'organe d'avertissement 66 résultant de l'ouverture du mano-contact 108 n'est pas remise en cause.

Le dispositif qui vient d'être décrit permet donc à la fois de fournir une indication de la valeur de pression d'huile à l'intérieur du moteur du véhicule par un actionnement en continu de l'organe d'avertissement 66, et d'indiquer une éventuelle insuffisance de niveau de liquide à l'intérieur du réservoir 30 lorsque le moteur est mis en route par un actionnement cyclique de l'organe d'avertissement 66, facile à distinguer de son actionnement en continu servant de façon connue à la vérification de la pression.

On remarquera en dernier lieu que, lorsque le niveau du liquide 32 à l'intérieur du carter moteur 30 est suffisant lors de la mise en route du véhicule, le dispositif de verrouillage 14 reste dans la position qu'il occupe sur la figure 2 jusqu'à l'arrêt du véhicule et la prochaine fermeture de l'interrupteur de clé de contact 38. Cette fermeture a pour conséquence comme précédemment de fermer le circuit comprenant la résistance chauffante 34 et le fil chauffant 40, de telle sorte que le bras 58 est sollicité vers la position représentée en traits interrompus sur la figure 1. Le bloc de ferrite 74 permet alors de dégager l'extrémité de la patte 88 de la gorge 94 formée sur le poussoir 70, de telle sorte que celui-ci peut repende la position représentée sur la figure 1 sous l'action du ressort 86 et qu'une nouvelle indication résultant par exemple d'un abaissement du liquide 32 au-dessous du niveau minimum A peut conduire au processus représenté sur la figure 1, ou au contraire, si le niveau du liquide 32 est resté suffisamment élevé, à la répétition du processus décrit en se référant à la figure 2.

On comprendra que l'invention n'est pas limitée au mode de réalisation décrit à titre d'exemple, aussi bien en ce qui concerne son application à l'indication du niveau du liquide lubrifiant contenu à l'intérieur du carter du moteur d'un véhicule automobile, qu'en ce qui concerne sa structure qui peut être modifiée sensiblement, une source de pression du type de la source de pression 12 pouvant par exemple être disposée à un emplacement relativement éloigné par rapport au réservoir dont on désire surveiller le niveau.

**Revendications**

1. Indicateur de niveau d'un liquide contenu dans un réservoir, comprenant une sonde tubulaire plongée dans le liquide et débouchant à une profondeur définissant le niveau minimum de liquide dans le réservoir, une source de pression gazeuse comportant un boîtier définissant une chambre remplie de gaz communiquant avec la sonde et une résistance chauffante incluse dans ladite chambre et destinée à accroître la pression qui y règne lors de la mise en œuvre de cette source de pression gazeuse, et un dispositif bistable à action brusque incluant un élément chauffant électrique alimenté par le même circuit que ladite résistance chauffante et conçu pour faire passer cycliquement ce dispositif d'une position de fermeture à une position d'ouverture du circuit commun d'alimentation, et réciproquement, à la suite de la mise en œuvre de la source de pression gazeuse, caractérisé en ce que le dispositif bistable (42) est en outre agencé de manière à actionner un organe d'avertissement (66) lorsqu'il est en position de fermeture, et en ce qu'est par ailleurs prévu un dispositif de verrouillage (14) qui répond aux variations de pression à l'intérieur de la chambre en passant d'une position de repos à une position de verrouillage lorsque cette pression vient à excéder une valeur prédéterminée indiquant ainsi que le niveau du liquide dans le réservoir est au-dessus du minimum admissible, ledit dispositif de verrouillage (14) coopérant avec ledit dispositif bistable (42) pour l'empêcher alors de revenir à sa position de fermeture et empêcher ainsi son fonctionnement cyclique.

2. Indicateur de niveau selon la revendication 1, et dans lequel le dispositif bistable comporte un contact mobile coopérant en position de fermeture avec un contact fixe de manière à fermer le circuit commun d'alimentation de ladite résistance chauffante et dudit élément chauffant, caractérisé en ce que ces contacts (60, 62) contrôlent simultanément le circuit d'actionnement de l'organe d'avertissement (66).

3. Indicateur de niveau selon la revendication 2, caractérisé en ce qu'est prévu un moyen de butée mobile (72, 74) dont le déplacement, commandé par le dispositif de verrouillage (14) lorsque celui-ci vient occuper sa position de verrouillage, a pour effet de s'opposer à l'engagement mutuel desdits contacts.

4. Indicateur de niveau selon la revendication 3, caractérisé en ce que le dispositif de verrouillage (14) comporte des moyens (68) formant piston qui sont sensibles á la pression régnant dans une chambre de commande (78) communiquant avec la chambre remplie de gaz (20) et qui commandent les déplacements d'un poussoir (70) contre lequel vient prendre appui une lame élastique (72) appartenant audit moyen de butée.

5. Indicateur de niveau selon la revendication 4, caractérisé en ce que le poussoir (70) est de forme sensiblement cylindrique et comporte au moins deux sections (90, 92) de diamètres différents contre l'une desquelles vient prendre appui ladite lame élastique (72) selon la position occupée par le poussoir pour définir les positions de repos et de verrouillage du dispositif de verrouillage.

6. Indicateur de niveau selon la revendication 5, caractérisé en ce que le poussoir comporte une section de petit diamètre (90) et une section de grand diamètre (92), une gorge (94) étant ménagée dans cette dernière au voisinage de la section de petit diamètre, la lame élastique venant engager par une patte (88) soit la section de petit diamètre, soit ladite gorge, selon que le dispositif de verrouillage occupe respectivement sa position de repos ou sa position de verrouillage.

7. Indicateur de niveau selon la revendication 6, caractérisé en ce que ladite patte (88) est sollicitée vers la section de petit diamètre (90) ou vers ladite gorge (94) par l'élasticité de ladite lame (72), de telle sorte qu'elle retient le poussoir dans la position correspondant au verrouillage du dispositif de verrouillage lorsque la patte est engagée dans ladite gorge, à l'encontre de moyens élastiques (86) associés aux moyens formant piston (68) pour solliciter normalement le poussoir vers sa position de repos.

8. Indicateur de niveau selon la revendication 7, caractérisé en ce qu'est prévu un moyen (74) pour déverrouiller le poussoir (70) lors d'un retour subséquent de l'indicateur à sa position de repos.

9. Indicateur de niveau selon la revendication 8, caractérisé en ce que le moyen de déverrouillage comporte un organe magnétique (74) tel qu'un bloc de ferrite associé au contact mobile (60) et susceptible d'écarter la lame élastique (72) du poussoir (70) lors d'un déplacement subséquent de ce contact mobile.

10. Indicateur de niveau selon l'une quelconque des revendications 1 à 9, et dans lequel le réservoir est constitué par le carter du moteur d'un véhicule automobile, caractérisé en ce que le circuit d'alimentation de ladite résistance chauffante (34) et dudit élément chauffant (40) et le circuit d'actionnement dudit organe d'avertissement (66) sont des circuits parallèles qui sont tous deux contrôlés par l'interrupteur de clef de contact (38) du véhicule, et que l'organe d'avertissement est constitué par un voyant lumineux (66) du tableau de bord qui est lui-même monté en série avec le mano-contact de pression d'huile.

## Claims

1. A level indicator for a liquid contained in a reservoir, comprising a tubular probe immersed in the liquid and opening to a depth which defines the minimum permissible level of said liquid in the reservoir, a gas pressure source including a housing which defines a gas-filled chamber communicating with said probe and a heating resistor included in said chamber and intended to increase the pressure therein when said gas pressure source is activated, and a snap action bistable device which comprises an electrical heating element energized by the same circuit as said heating resistor and adapted to cyclically move said device from a position in which the common energizing circuit is closed to a position in which said circuit is open, and conversely, after activation of the gas pressure source, characterized in that the bistable device (42) is so designed as to energize a warning device (66) when being in its closing position, and in that there is further provided a locking device (14) responsive to the variations of the pressure reigning inside said chamber and moving from a rest position to a locking position when said pressure rises above a predetermined value due to the liquid level in the reservoir being above the minimum permissible level, said locking device (14) then cooperating with said bistable device (42) for preventing same from moving back to its closing position and for so stopping its cyclical operation.

2. A level indicator according to claim 1, wherein the bistable device comprises a movable contact engaging a fixed contact in the closing position so as to close the common energizing circuit for said heating resistor and said heating element, characterized in that these contacts (60, 62) control simultaneously the energizing circuit for the warning device (66).

3. A level indicator according to claim 2, characterized in that there is provided a movable abutment (72, 74) the displacement of which is caused by the locking device (14) when the latter moves to its locking position, and results in preventing the mutual engagement of said contacts.

4. A level indicator according to claim 3, characterized in that the locking device (14) comprises piston forming means (68) which are responsive to the pressure reigning in a control chamber (78) in communication with the gas-filled chamber (20) and which control the displacements of a push rod (70) against which is urged a leaf spring (72) which forms part of the movable abutment.

5. A level indicator according to claim 4, characterized in that the push rod (70) is substancially cylindrical and has at least two sections (90, 92) of different diameter, either of which said leaf spring (72) engages according to the position occupied by the push rod for defining the rest and locking positions of the locking device respectively.

6. A level indicator according to claim 5, characterized in that the push rod includes a small diameter section (90) and a large diameter section (92), a groove (94) being provided in the latter at a short distance from the small diameter section, and the leaf spring being provided with a lug (88) which engages either the small diameter section or the said groove according to the locking device occupying its rest position or its locking position respectively.

7. A level indicator according to claim 6, characterized in that the lug (88) is urged against the small diameter section (90) or the groove (94) by the resiliency of said leaf spring (72), so as to retain the push rod in its position which causes the locking device to get locked when said lug engages said groove against resilient means (86) which cooperate with the piston forming means (68) for normally urging the push rod toward its rest position.

8. A level indicator according to claim 7, characterized in that there is provided a mean (74) for unlocking the push rod (70) upon a subsequent return of the indicator to its rest position.

9. A level indicator according to claim 8, characterized in that the unlocking mean comprises a magnetic member (74) such as a ferrit block which is associated with the movable contact (60) und which is capable of moving the leaf spring (72) away from the push rod (70) upon a subsequent displacement of said movable contact.

10. A level indicator according to any of claims 1 to 9, wherein the reservoir is constituted by the crankcase of a motor vehicle, characterized in that the energizing circuit for the heating resistor (34) and the heating element (40) and the energizing circuit for the warning device (66) are parallel circuits which are both controlled by the vehicle ignition switch (38), and in that the warning device is constituted by a lighting signal (66) on the dash-board which itself is connected in series with the oil pressure switch.

## Patentansprüche

1. Einrichtung zum Anzeigen der Füllstandshöhe einer Flüssigkeit in einem Vorratsbehälter, mit einer rohrförmigen Sonde, welche in die Flüssigkeit eintaucht und in einer Tiefe endet, welche dem minimalen Füllstand der Flüssigkeit im Vorratsbehälter entspricht; mit einer Druckgasquelle, welche ein Gehäuse, das eine mit Gas gefüllte, mit der Sonde in Verbindung stehende Kammer begrenzt und einen in dieser Kammer angeordneten Heizwiderstand aufweist, durch welchen nach Einschalten der Druckgasquelle der in der Kammer des Gehäuses herrschende Druck erhöht wird; und mit einer abrupt ansprechenden bistabilen Einrichtung, welche einen elektrischen Heizer aufweist, der durch denselben Kreis gespeist wird wie der Heizwiderstand, und welche so ausgelegt ist, daß sie zyklisch zwischen einer den gemeinsamen Speisekreis unterbrechenden und einer diesen schließenden Stellung hin- und hergeschaltet wird, wenn die Druckgasquelle eingeschaltet ist, dadurch gekennzeichnet, daß die bistabile Einrichtung (42) so ausgebildet ist, daß sie dann, wenn sie in der Schließstellung steht, eine Warneinrichtung (66) betätigt; und daß eine Verriegelungseinrichtung (14) vorgesehen ist, die auf Druckänderungen im Inneren der Kammer derart anspricht, daß sie von einer Ruhestellung in eine Verriegelungsstellung übergeht, wenn dieser Druck einen vorgegebenen Wert überschreitet, wodurch angezeigt wird, daß der Flüssigkeitsspiegel im Vorratsbehälter unter dem minimalen Füllstand liegt, und die mit der bistabilen Einrichtung (42) derart zusammenarbeitet, daß sie deren Zurückkehren in die Schließstellung und damit auch deren zyklisches Arbeiten verhindert.

2. Einrichtung nach Anspruch 1, bei welcher die bistabile Einrichtung einen bewegbaren Kontakt aufweist, der in der Schließstellung mit einem feststehenden Kontakt derart zusammenarbeitet, daß der gemeinsame Speisekreis für den Heizwiderstand und den Heizer geschlossen wird, dadurch gekennzeichnet, daß diese Kontakte (60, 62) gleichzeitig die Betätigung der Warneinrichtung (66) steuern.

3. Einrichtung nach Anspruch 2, dadurch gekennzeichnet, daß ein beweglicher Anschlag (72, 74) vorgesehen ist, der durch die Verriegelungseinrichtung (14) dann betätigt wird, wenn die Verriegelungseinrichtung gerade in ihre Verriegelungsstellung bewegt worden ist und welche bei ihrer dann erfolgten Verlagerung ein In-Anlage-Kommen der Kontakte aneinander verhindert.

4. Einrichtung nach Anspruch 3, dadurch gekennzeichnet, daß die Verriegelungseinrichtung (14) einen Kolben bildende Bauelemente (68) aufweist, die mit dem Druck in einer Steuerkammer (78) beaufschlagt sind, welche ihrerseits mit der mit Gas gefüllten Kammer (20) in Verbindung steht, und welche die Verlagerung eines Stößels (70) steuern, gegen welchen eine Blattfeder (72) in Anlage kommt, welche zu der Anschlageinrichtung gehört.

5. Einrichtung nach Anspruch 4, dadurch gekennzeichnet, daß der Stößel (70) im wesentlichen zylindrisch ist und zumindest zwei Abschnitte (90, 92) mit unterschiedlichem Durchmesser aufweist, wobei die Blattfeder (72) jeweils an einem dieser Abschnitte anliegt, je nachdem, welche Stellung der Stößel einnimmt, wodurch die Ruhestellung und die Verriegelungsstellung der Verriegelungseinrichtung vorgegeben sind.

6. Einrichtung nach Anspruch 5, dadurch gekennzeichnet, daß der Stößel einen kleinen Durchmesser aufweisenden Abschnitt (90) und einen großen Durchmesser aufweisenden Abschnitt (92) hat, daß in dem letztgenannten Abschnitt in der Nachbarschaft des Abschnittes mit kleinem Durchmesser eine Nut (94) vorgesehen ist und daß die Blattfeder über einen Finger (88) entweder an dem kleinen Durchmesser aufweisenden Abschnitt oder der Nut elastisch anliegt, je nachdem, ob die Verriegelungseinrichtung ihre Ruhestellung oder ihre Verriegelungsstellung einnimmt.

7. Einrichtung nach Anspruch 6, dadurch gekennzeichnet, daß der Finger (88) durch die Federkraft der Blattfeder (72) in Richtung auf den kleinen Durchmesser aufweisenden Abschnitt (90) oder die Nut (94) derart vorgespannt ist, daß sie den Stößel in der Verriegelungsstellung der Verriegelungseinrichtung entsprechenden Stellung zurückhält, wenn der Finger in die Nut eingreift, während den den Kolben (68) bildenden Bauelementen eine in entgegengesetzter Richtung wirkende Federanordnung (86) zugeordnet ist, durch welche der Stößel normalerweise in seine Ruhestellung vorgespannt ist.

8. Einrichtung nach Anspruch 7, dadurch gekennzeichnet, daß eine Einrichtung (74) zum Entriegeln des Stößels (70) vorgesehen ist, die dann arbeitet, wenn die Füllstandsanzeigeeinrichtung später in ihre Ruhestellung zurückgekehrt ist.

9. Einrichtung nach Anspruch 8, dadurch gekennzeichnet, daß zu der Entriegelungseinrichtung ein magnetisches Bauteil (74), z. B. ein Ferritblock, gehört, welches dem bewegbaren Kontakt (60) zugeordnet ist und die Blattfeder (72) vom Stößel (70) wegbewegen kann, wenn eine nachfolgende Verlagerung des bewegbaren Kontaktes erfolgt.

10. Einrichtung nach einem der Ansprüche 1–9, bei welcher der Vorratsbehälter die Ölwanne des Motors eines Kraftfahrzeuges ist, dadurch gekennzeichnet, daß der Speisekreis für den Heizwiderstand (34) und den Heizer (40) und der Betätigungskreis für die Warneinrichtung (66) parallele Kreise sind, welche beide zusammen über den Zündschalter (38) des Fahrzeuges erregt werden, und daß die Warneinrichtung eine Leuchtanzeige (66) aufweist, die auf dem Instrumentenbrett des Fahrzeuges angeordnet ist und selbst in Reihe zum Öldruckschalter des Fahrzeuges geschaltet ist.

Fig.1

0 000 680

*Fig. 2*